# EUROPEAN PATENT APPLICATION

(11) **EP 4 425 814 A1**
(43) Date of publication of application: **04.09.2024**
(21) Application number: 24153122.7
(22) Date of filing: 22.01.2024
(51) Int. Cl.: H04L 5/00

(54) **PHYSICAL UPLINK SHARED CHANNEL TRANSMISSION**

(30) Priority: 03.03.2023 FI 20235256
(71) Applicant: Nokia Technologies Oy, 02610 Espoo (FI)
(72) Inventor: KARJALAINEN, Juha Pekka, Sotkamo (FI); HAKOLA, Sami-Jukka, Kempele (FI); KOSKELA, Timo, Oulu (FI)
(74) Representative: Nokia EPO representatives

(57) **Abstract**

Example embodiments of the present disclosure relate to an apparatus receiving an instruction to perform interchanging of an association of coreset pool indices with sounding reference signal (SRS) resource sets. The apparatus interchanges an association of a first coreset pool index with a first SRS resource set of the SRS resource sets and an association of a second coreset pool index with a second SRS resource set of the SRS resource sets to an association of the first coreset pool index with the second SRS resource set and an association of the second coreset pool index with the first SRS resource set. The apparatus transmits one or more SRS transmissions associated with the first or second coreset pool index and/or a physical uplink shared channel (PUSCH) transmission based on an SRS resource indicator (SRI) associated with the first or second coreset pool index, in accordance with the interchanged association.

## Description

### CROSS-REFERENCE TO RELATED APPLICATION

The present application claims priority to, and the benefit of, Finland Application No. 20235256, filed March 3th, 2023, the contents of which are hereby incorporated by reference in their entirety.

### FIELD

Various example embodiments generally relate to the field of communication, and in particular, to apparatuses, methods and a computer readable storage medium for a physical uplink shared channel (PUSCH) transmission.

### BACKGROUND

In the communications area, there is a constant evolution ongoing in order to provide efficient and reliable solutions for utilizing wireless communication networks. Each new generation has its own technical challenges for handling the different situations and processes that are needed to connect and serve devices connected to the wireless network. In the fifth generation (5G) new radio (NR), it was proposed to support simultaneous multi-panel uplink (UL) transmission with at least two panels.

In comparison to single downlink control information (S-DCI) based release 17 (Rel-17) time division multiplexing (TDM) repetition scheme, both S-DCI and multi (M)-DCI based simultaneous uplink multi-panel PUSCH schemes will be investigated in release 18 (Rel-18), targeting to enhance throughput and reliability with reduced latency. However, there are still some open problems for simultaneous uplink multi-panel PUSCH transmissions that will be studied in the near future.

R1-2211591, FRAUNHOFER IIS. et al, "On UL precoding indication for simultaneous multi-panel transmission", 3GPP TSG RAN WG1 Meeting #111, Toulouse (FR), 14th November - 18th November 2022 teaches Multi DCI based multi panel PUSCH, wherein two SRS resource sets are configured and each DCI may schedule a single-panel PUSCH that has an explicit or an implicit association with one SRS resource set. The association may be performed via a CORESET pool index. It suggests that the use of identical panels and SRS configurations and leaving the mapping between the SRS resource sets and panels to the UE, the switching of panels associated with each TRP with changing channel conditions may be achieved via UE implementation. It also suggests that with explicit association via gNB signalling, higher flexibility in panel architecture, SRS configurations is achieved at the cost of possibly restrictive UE implementation and control overhead.

### SUMMARY

In a first aspect, there is provided an apparatus, a method for an apparatus or a computer program for: receiveing, from a network device, an instruction to perform an interchanging of an association of coreset pool indices with sounding reference signal (SRS) resource sets of the apparatus; interchanging, based at least on the instruction, an association of a first coreset pool index with a first SRS resource set of the SRS resource sets and an association of a second coreset pool index with a second SRS resource set of the SRS resource sets to an association of the first coreset pool index with the second SRS resource set and an association of the second coreset pool index with the first SRS resource set; and transmitting, to a network device, one or more SRS transmissions associated with the first or second coreset pool index in accordance with the interchanged association and/or a physical uplink shared channel transmission based on an SRS resource indicator associated with the first or second coreset pool index in accordance with the interchanged association.

In a second aspect, there is provided an apparatus for: transmitting, to a terminal device, an instruction to perform interchanging of an association of coreset pool indices with sounding reference signal (SRS) resource sets of the apparatus; and receiving, from the terminal device, in accordance with the interchanged association, one or more SRS transmissions and/or a physical uplink shared channel transmission based on an SRS resource indicator.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1A illustrates an example network environment in which example embodiments of the present disclosure may be implemented;
FIG. 1B illustrates an example illustration of antenna panel selection related to some embodiments of the present disclosure;
FIG. 1C illustrates an example illustration of fixed associations between CoresetPoolIndices and UL sounding reference signal (SRS) resource sets related to some embodiments of the present disclosure;
FIG. 2 illustrates an example signaling process between a terminal device and a network device according to some embodiments of the present disclosure;
FIG. 3 illustrates an example illustration of a CoresetPoolIndex value switching indication according to some embodiments of the present disclosure;
FIG. 4 illustrates a flowchart of a method implemented at a terminal device according to some embodiments of the present disclosure;
FIG. 5 illustrates a flowchart of a method implemented at a network device according to some embodiments of the present disclosure;
FIG. 6 illustrates a simplified block diagram of a device that is suitable for implementing some example embodiments of the present disclosure; and
FIG. 7 illustrates a block diagram of an example of a computer readable medium in accordance with some example embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which the present disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) communication protocols, and/or beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a new radio (NR) NB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial, a relay node, an integrated access and backhaul (IAB) node, and/or industrial wireless networks, and the like. In the following description, the terms "terminal device", "communication device", "terminal", "user equipment" and "UE" may be used interchangeably.

As used herein, the term "resource", "transmission resource", "resource block", "physical resource block" (PRB), "UL resource" or "downlink (DL) resource" may refer to any resource for performing a communication, for example, a communication between a terminal device and a network device, such as a resource in time domain, a resource in frequency domain, a resource in space domain, a resource in code domain, a resource in a combination of more than one domain or any other resource enabling a communication, and the like. In the following, a resource in time domain (such as, a subframe) will be used as an example of a transmission resource for describing some example embodiments of the present disclosure. It is noted that example embodiments of the present disclosure are equally applicable to other resources in other domains.

Principles and some example embodiments of the present disclosure will be described in detail below with reference to the accompanying drawings. However, it is to be noted that these embodiments are given to enable the skilled in the art to understand inventive concepts of example embodiments of the present disclosure and implement the solution as proposed herein, and not intended to limit scope of the present application in any way.

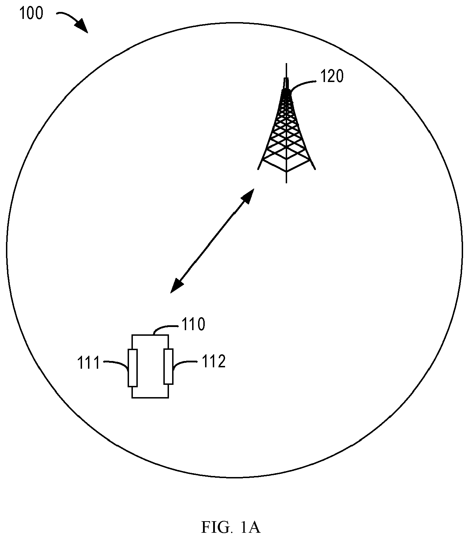

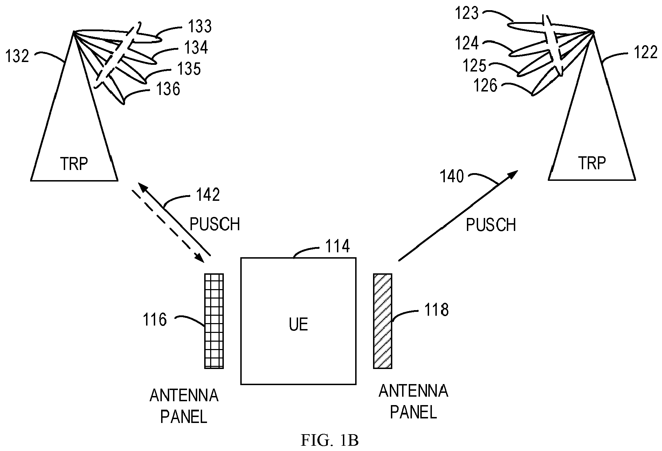

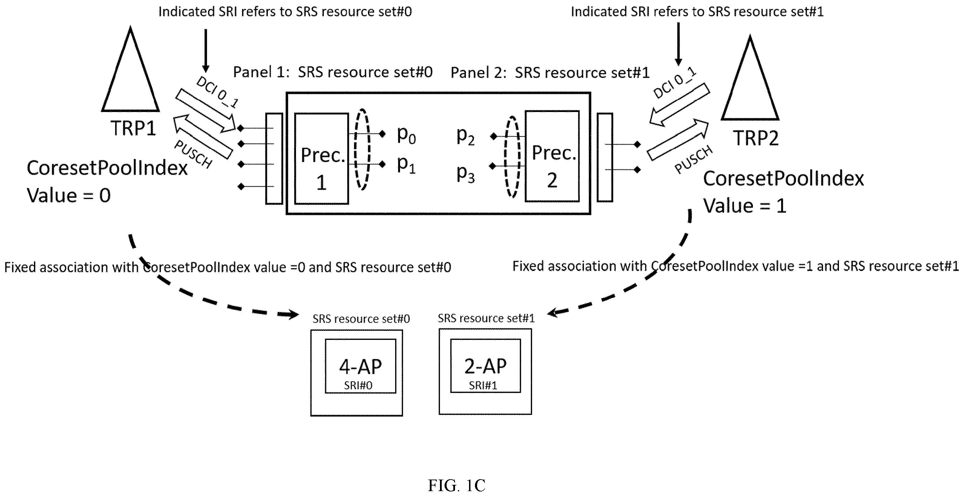

Reference is first made to FIG. 1, which illustrates an example network environment 100 in which example embodiments of the present disclosure may be implemented. The network environment 100, which may be a part of a communication network, comprises a terminal device 110 and a network device 120 communicating with each other or with other devices via each other. The terminal device 110 may also be implemented by a UE. The network device 120 may also be implemented by a gNB.

In some example embodiments, the network device 120 may be associated with one or more transmission and reception points (TRPs). Each TRP may be associated with one group of antenna ports. In case two TRPs are communicating with the terminal device 110, these two TRPs may be associated with or function as the network device 110, or these two TRPs may be associated with or function as two respective network devices, for example, the network device 120 and another network device (not shown).

The network device 120 may each operate using different frequency bands in both DL and UL. In communication systems, "UL" refers to a communication link in a direction from the terminal device 110 to the network device 120, and "DL" refers to a communication link in a direction from the network device 120 to the terminal device 110.

The terminal device 110 may be capable of connecting, for example wirelessly, and communicating in a UL and DL with the network device 120. The terminal device 110 may be configured to be communicated with the network device 120 via one or more TRPs. The one or more TRPs may be located within the same cell (intra-cell TRP) or within different cells (inter-cell TRP).

The terminal device 110 may be a multi-panel UE (MP-UE) comprising a plurality of panels. From a wireless communication perspective, an MP-UE may comprise any device having a plurality of antenna groups configured as a panel. The MP-UE may provide flexibility in selecting antennas for wireless communication. In an aspect, although multiple panels of the MP-UE may be active, one panel may be selected for uplink transmission using a single beam. In other aspects, multiple beams may be transmitted simultaneously from multiple panels.

The terminal device 110 in FIG. 1A may comprise a plurality of panels, such as a panel 111 and a panel 112, and additional optional panels (not shown) if necessary. In general, a panel may be a component of UE that includes one or more antenna groups. The antenna group may comprise one or more antennas, antenna elements, and/or antenna arrays. Each panel may operate independently to some extent. For example, each panel may be individually activated or deactivated. The activated panel may be used for transmission and/or reception, while the disabled panel may not be used for transmission and/or reception. The panels may be elements of an antenna group that can independently control beams. For example, within the panel, one beam may be selected and used for UL transmission. In addition, multiple panels may be used for UL transmission, and multiple beams (each beam selected per panel) may be used for UL transmission across different panels.

It is to be understood that in FIG. 1A, the number of network devices and terminal devices is only for the purpose of illustration without suggesting any limitations. Moreover, the number of panels of a terminal device is also given only for the purpose of illustration. The network environment 100 may include any suitable number of network devices and terminal devices and a terminal device may include any suitable number of panels, as long as the number could be adapted for implementing embodiments of the present disclosure.

The communications in the environment 100 may follow any suitable communication standards or protocols, which are already in existence or to be developed in the future, such as Universal Mobile Telecommunications System (UMTS), long term evolution (LTE), LTE-Advanced (LTE-A), the fifth generation (5G) New Radio (NR), Wireless Fidelity (Wi-Fi) and Worldwide Interoperability for Microwave Access (WiMAX) standards, and employs any suitable communication technologies, including, for example, Multiple-Input Multiple-Output (MIMO), Orthogonal Frequency Division Multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), Carrier Aggregation (CA), Dual Connectivity (DC), and New Radio Unlicensed (NR-U) technologies.

Rel-17 was specified to enhance the reliability of uplink transmission in the context of an M-TRP scenario. Based on the Rel-17 capability set index reporting, a network device can be aware of the UE antenna panel specific transmission capability of UL SRS codebook-based transmission into a certain spatial UL direction, for example, (including information on the number of UL SRS antenna ports. For example, based on this information, the network device can trigger transmission of two different UL SRS resource sets with the usage of a codebook to obtain TRP-specific transmit precoder matrix indicator (TPMI) hypotheses (i.e., to determine a precoder index and rank selection) for an antenna panel specifically for PUSCH transmissions. Two different UL SRS resource sets have been configured with two different DL/or joint DL and UL/UL TCI states associated with the spatial source.

Based on obtained TRP-specific TPMI and SRS resource indicator (SRI) information, the network device can trigger non-simultaneous TRP-specific Rel-17 PUSCH transmission by indicating, via DCI, a codepoint for a single SRS resource indicator, in which 2-bits, and thereby 4 values, are reserved, when two SRS resource sets configured with the usage of codebook or non-codebook. For example, the two values out of the four possible values of the codepoint may be used to indicate which of the two SRIs, the first or the second, is used to enable dynamic switching between a single TRP (either TRP1 or either TRP2) PUSCH transmission in a TDM manner and the other remaining two values may be used to enable M-TRP PUSCH transmission between TRP1 and TRP2 in the TDM manner with repetition. Further, either cyclical mapping or sequential mapping may be configured via radio resource control (RRC) signaling for mapping two SRIs to PUSCH repetitions. Moreover, for codebook based transmission, the DCI includes two separate codepoint fields for SRIs and two precoding information, and the number of transmission layer fields. For example, the first field may indicate the number of transmission layers, whereas the second field does not. For non-codebook based transmission, the DCI may comprise two SRI codepoint fields, where the first one may indicate the transmission layers and the second does not. Based on the received S-DCI, the terminal device may then transmit the PUSCH transmission using multiple antenna panels (only one panel at a time).

In Rel-17, the specification enables UE to be configured with either codebook or non-codebook based PUSCH transmission. In other words, based on this configuration, the UE may assume that upon reception of DCI with or without an uplink grant, SRS indicators and precoding information are associated with either codebook or non-codebook based PUSCH transmission.

FIG. 1B illustrates an example illustration of antenna panel selection related to some embodiments of the present disclosure. As shown in FIG. 1B, the example illustration of Rel-17 S-DCI for TDM M-TRP PUSCH repetition and antenna panel selection may be associated with a TRP 122 and a TRP 132. TRPs 122 and 132 may be associated with the network device 120 as shown in FIG.1A, and/or another network device (not shown in FIG. 1A). The S-DCI may comprise a codepoint for a single SRS resource indicator. The S-DCI may comprise two separate codepoint fields for SRIs and two precoding information and the number of transmission layer fields.

FIG. 1B involves a UE 114, which may be an example of the terminal device 110 as shown in FIG.1A. The UE 114 may comprise two antenna panels 116 and 118. The UE 114 may be configured with two different UL SRS resource sets to follow two different DL/or joint DL and UL/UL TCI states associated with the spatial source. The network (such as the TRP 122 or the TRP 132) can be aware of the antenna panel 116 or 118 specific transmission capability of UL SRS codebook-based transmission into a certain spatial UL direction. Based on this information, the network can trigger transmissions of two different UL SRS resource sets. For example, a PUSCH transmission 142 from the UE 114 to TRP 132 may be performed. A PUSCH transmission 140 from the UE 114 to the TRP 122 may be performed. The CRIs 133, 134, 135, and 136 may be used for beam management for the TRP 132. The CRIs 123, 124, 125, and 126 may be used for beam management for the TRP 122.

In Rel-18, it is important to identify and specify necessary enhancements for uplink MIMO, while necessary enhancements on downlink MIMO that facilitate the use of a large antenna array, not only for the frequency range 1 (FR1) but also for the frequency range 2 (FR2), would still need to be introduced to fulfill the request for the evolution of NR deployments.

The higher peak data rate for UL may play a significant role in short-range applications such as home entertainment, video surveillance/monitoring in industrial/healthcare/safety, integrated access backhaul (IAB), and other applications where the device's power/form-factor/cost are not as stringent as in traditional handheld devices. UL transmission with more than 4Tx is useful to bridge the gap between DL and UL spectral efficiency, in both FR1 and FR2. Hence, there is a strong need to develop a method and/or a signaling solution to overcome this problem for Rel-18 or beyond releases.

One of the objectives of Rel-18 NR MIMO Evo DL/UL is to discuss and define how to provide specification support for simultaneous multi-panel UL transmission with 2 panels (STx2P) as follows:

| | | |
|---|---|---|
| 1. Study, and if needed, specify the following items to facilitate simultaneous multi-panel UL transmission for higher UL throughput/reliability, focusing on FR2 and multi-TRP, assuming up to 2 TRPs and up to 2 panels, targeting CPE/FWA/vehicle/industrial devices (if applicable) | | |
| | - UL precoding indication for PUSCH, where no new codebook is introduced for multi-panel simultaneous transmission | |
| | | • The total number of layers is up to four across all panels and total number of codewords is up to two across all panels, considering single DCI and multi-DCI based multi-TRP operation. |
| | - UL beam indication for PUCCH/PUSCH, where unified TCI framework extension in objective 2 is assumed, considering single DCI and multi-DCI based multi-TRP operation | |
| | • For the case of multi-DCI based multi-TRP operation, only PUSCH+PUSCH, or PUCCH+PUCCH is transmitted across two panels in a same CC. | |

In comparison to the S-DCI based Rel-17 TDM repetition scheme, Rel-18 will specify the support for both S-DCI and M-DCI based simultaneous uplink multi-panel PUSCH schemes with spatial division multiplexing (SDM) and single frequency network (SFN), targeting to enhance throughput and reliability with reduced latency. With the SDM-based scheme, different layers/DMRS ports of one PUSCH are separately precoded and transmitted from different UE panels simultaneously. With the SFN-based transmission scheme, all of the same layers/DMRS ports of one PUSCH transmission occasion are transmitted from two different UE panels simultaneously.

In Rel-17, the specifications (e.g. TS 38.214, and TS 38.212) do not provide any support for S-DCI or M-DCI based simultanous UL PUSCH transmission with multiple antenna panels. For S-DCI, a network is assumed to have a centralized scheduler with an ideal backhaul between multiple TRPs, whereas for M-DCI network is assumed to have a distributed scheduler with non-ideal backhaul is assumed.

In Rel-18, for M-DCI based simultaneous multi-panel dynamic grant (DG) PUSCH + DG PUSCH transmissions within the same component carrier (CC), the UE can assume that different PUSCH transmissions are associated with different CoresetPoolIndex values which can be determined implicitly from a triggering DCI (similarly as in Rel-16 DL).

For configured grant (CG)-PUSCH, the association with a CoresetPoolIndex value is not yet agreed and it is under discussion. However, for type 2 CG, the association is likely similar to DG-PUSCH, i.e. based on the activation DCI. For type 1 CG, the association is likely to follow the higher layer configuration for each CG configuration.

In the previous radio access network workgroup 1 (RAN1)-110bis e-meeting, the following agreement was made in UL precoding indication for multi-panel transmission:

| **Agreement** | |
|---|---|
| Support STxMP PUSCH+PUSCH transmission in multi-DCI based system in Rel-18. | |
| | • Two independent PUSCHs associated with different TRPs can be transmitted by a UE simultaneously in same active BWP. |
| | • The total number of layers of these two PUSCHs is up to 4. |
| | • FFS: whether the number of layers of each of these two PUSCHs is up to 2. |

Moreover, in the previous RAN1-111 e-meeting, the following agreement was made in UL precoding indication for multi-panel transmission:

| **Agreement** | | | |
|---|---|---|---|
| | • For multi-DCI based STxMP, to schedule a PUSCH for STxMP PUSCH+PUSCH transmission, | | |
| | | ∘ Alt1: The first SRS resource set is associated with CoresetPoolIndex value 0 and the other SRS resource set is associated with CoresetPoolIndex value 1 | |
| | | | ▪ The PUSCH is associated with SRS resource set with the same value of CoresetPoolIndex |
| | | | ▪ FFS: Which is the first SRS resource set, e.g., the set with lower set ID. |
| | ▪ Regarding how to interpret the SRI/TPMI field in DCI: | | |
| | | ∘ For DG-PUSCH, the indicated SRI/TPMI field corresponds to the SRS resource set associated with same CoresetPoolIndex value of the CORESET where scheduling DCI format 0_1 or 0_2 is received | |
| | | ∘ For Type 2 CG-PUSCH, the indicated SRI/TPMI field corresponds to the SRS resource set associated with same CoresetPoolIndex value of the CORESET where activation DCI is received. | |
| | • For Type 1 CG-PUSCH, one SRS_resource_set_index value is configured in RRC in ConfiguredGrantConfig and the srs-ResourceIndicator/ precodingAndNumberOfLayers correspond to the SRS resource set | | |

Based on the above discussions, it remains unclear for M-DCI based simultaneous multi-panel transmission whether it is possible and how to apply the agreed fixed UL SRS resource set associated with the CoresetPoolIndex value 0 and 1, respectively.

Rel-18 UEs are equipped with different numbers of transmission (TX) antenna panels with different TX capabilities, e.g. the number of TX antenna ports, the number of PUSCH layers, where one or more antenna panels can be used for full/partially/non-simultaneous multi-panel PUSCH transmissions to different TRPs associated with different CoresetPoolIndex values. To support different TX antenna panel capabilities, the UE can be configured with two UL SRS resource sets where each set is configured with a different number of resources with a different number of antenna ports according to the panel specific capability.

According to previous meeting agreements, for M-DCI based simultaneous transmission across Multi-panel (STxMP) PUSCH transmission, the UE can be configured with one or more UL SRS resource sets with fixed association with TRPs via the coresetPoolindex association. More specifically, the first UL SRS resource set (e.g. TRP#0) may be assumed to be configured with the fixed association with the CoresetPoolIndex value 0 (e.g. TRP#1) and another UL SRS resource set (e.g. TRP#1) may be assumed to be configured with the coresetPoolndex value 1 (e.g. TRP#2).

FIG. 1C illustrates an example illustration of fixed associations between CoresetPoolIndices and UL SRS resource sets related to some embodiments of the present disclosure. The agreed fixed associations between CoresetPoolIndex values (for example, value 0 or 1) and UL SRS resource sets (for example, SRS resource set#0 and SRS resource set#1) has been shown in FIG. C. When M-DCI based STxMP PUSCH transmission is triggered from the TRP#1 (where the control resource set (CORESET) associated with triggering DCI has coresetPoolindex value = 0), the UE may assume that the SRI codepoint field value indicates a first SRI (i.e. SRI#0) within the UL SRS resource set#0. Similarly, when M-DCI based STxMP PUSCH transmission is triggered from the TRP#2 (where the CORESET associated with triggering DCI has coresetPoolindex value = 1), the UE may assume that the SRI codepoint field value indicates a second SRI (SRI#1) within the UL SRS resource set#1.

However, a problem related to a fixed associations between CoresetPoolIndices and UL SRS resource sets occurs when the UE rotates (e.g. by 180 degrees). As discussed above, based on UE capability index reporting and configured UL SRS resource sets #0 and #1, both TRP#1 and TRP#2 can be aware of the UE's UL SRS transmission capability (for example, the number of SRS antenna ports) to a set of specific DL RS resources. Based on the information, both TRPs can identify that configured UL SRS resource sets #0 and #1 have wrong CoresetPoolIndex values associated with both SRS resource sets (i.e. resource set #0 with CoresetPoolIndex value= 0 and resource set#1 with CoresetPoolIndex value = 1). Then, for example, when the M-DCI based STxMP PUSCH transmission is triggered from the TRP#1 (where the CORESET associated with triggering DCI has coresetPoolindex value = 0), the UE may assume that the SRI codepoint field value indicates the first SRI (i.e. SRI#0) within the UL SRS resource set#0.

However, due to the rotation of the UE, UL SRS resource set#0 cannot be associated with the CoresetPoolIndex value =0, for the reason that the antenna panel 1 with the SRS resource set #0 with corresponding TX beams cannot be directed towards the TRP#1 (i.e. the CoresetPoolIndex value =0), but rather directed towards the TPR #2 (i.e. the CoresetPoolIndex value =1). Therefore, the fixed associations between CoresetPoolIndices and UL SRS resource sets leads to the triggering of wrong UL SRS resource set usage for precoder indication for the PUSCH. The same problem exists when the M-SCI based STxMP PUSCH transmission is triggered from the TPR#2. As a result, DCI format 0_1 cannot be used to trigger M-DCI based STxMP PUSCH transmission to different TRPs when the fixed associations between CoresetPoolIndices and SRS resource sets is applied.

As described above, currently, there is no solution proposed to solve the problem related to the fixed associations between configured UL SRS resource sets and CoresetPoolIndices, especially when the UE rotates, leading to a problem that existing uplink DCI format cannot be used to trigger the M-DCI based STxMP PUSCH transmission to different TRPs. Therefore, there is a need for an improved solution for determining the associations between configured UL SRS resource sets and CoresetPoolIndices, and thus for the PUSCH to the TRPs.

According to embodiments of the present disclosure, there is provided a scheme for a PUSCH transmission. With this scheme, a terminal device receives, from a network device, information related to a change of one or more coreset pool indices associated with one or more SRS resource sets of the apparatus. The terminal device determines, based at least on the information, a coreset pool index associated with an SRS resource set of the one or more SRS resource sets. Moreover, the terminal device transmits, to the network device or another network device, one or more SRS transmissions associated with the coreset pool index and/or a PUSCH transmission based on an SRI associated with the coreset pool index.

This scheme enables the network to dynamically indicate the determination of the association between the coresetPoolIndex values and the configured UL SRS resource sets. As a result of this, despite any dynamic orientation change of the terminal device, the terminal device can be indicated to determine a correct UL SRS resource for the scheduled PUSCH transmission. Without this proposed scheme, it is not possible to use the correct SRS resource for the PUSCH transmission and/or use correct SRS resource set different usage types (e.g. codebook/noncodebook/antenna-switching/beam management) and corresponding SRS resources for transmission, especially in M-DCI based STxMP transmission scenarios when UE orientation with corresponding UE TX antenna panels changes with respect to TPRs.

Thus, there is provided more flexibility for the determination of the associations between the coresetPoolIndex values and the configured UL SRS resource sets without causing large implementation complexity at the terminal and network sides. In this way, it is possible to improve communication quality.

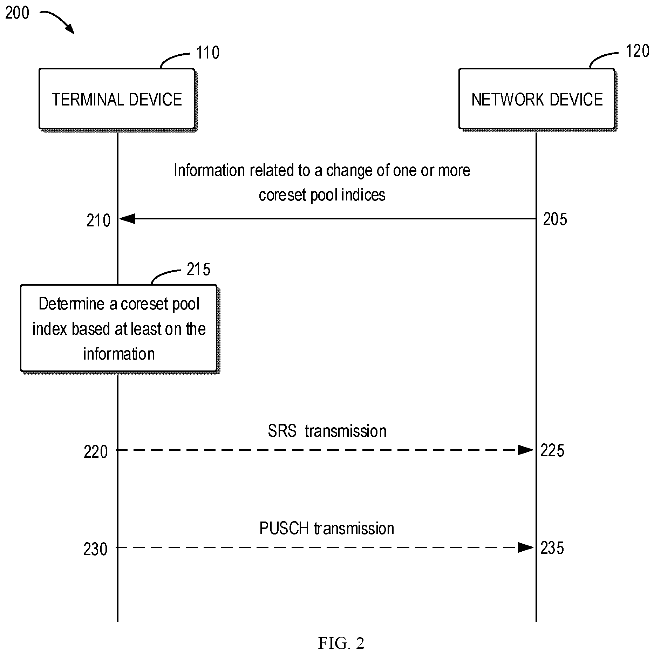

Reference is made to FIG. 2, which illustrates an example signaling process 200 between the terminal device and the network device according to some embodiments of the present disclosure. For the purpose of discussion, the signaling flow 200 will be described with reference to FIG. 1A. In FIG. 2, the terminal device 110 in FIG.1A may be an example of an apparatus that can communicate with the network device 120 in FIG.1A.

As shown in FIG. 2, the network device 120 transmits (205), to the terminal device 110, information related to a change of one or more coreset pool indices (also denoted as CoresetPoolIndices) associated with one or more SRS resource sets of the terminal device 110. Accordingly, the terminal device 110 receives (210) the information from the network device 120. Then, the terminal device 110 determines (215), based at least on the information, a coreset pool index associated with an SRS resource set of the one or more SRS resource sets.

For example, the information may indicate one or more coreset pool indices associated with the one or more SRS resource sets, to be used at the terminal device 110. As another example, one or more fixed associations between the one or more SRS resource sets and the coreset pool indices may be configured, and in this case, the information may indicate whether a coreset pool index switch between at least two SRS resource sets of the one or more SRS resource sets is to be applied at the terminal device 110.

The information may be transmitted in a variety of approaches. The following transmission approaches may be used.

In some example embodiments, the information may be transmitted in a DCI. For example, the DCI for PUSCH scheduling may include a new codepoint field, for example, called "SwitchSRS-Association", to carry the information. In this case, in case fixed associations have been configured between the CoresetPoolIndices and the SRS resource sets, the information may indicate whether a coreset pool index switch between at least two SRS resource sets of the one or more SRS resource sets is to be applied at the terminal device 110. Then, the terminal device 110 may determine, based on the information, coreset pool indices associated with the at least two SRS resource sets, by a coreset pool index interchanging between the at least two SRS resource sets.

As an example, there may be two SRS resource sets to be used and these two SRS resource sets may be configured to have fixed associations with two CoresetPoolIndex values respectively. In this case, the new "SwitchSRS-Association" codepoint field may be a 1-bit boolean indicator. For example, the "SwitchSRS-Association" codepoint field may be set to a first indicator (such as "ON") or a second indicator (such as "OFF"). The information may indicate the terminal device 110 to switch the CoresetPoolIndex values between these two SRS resource sets, for example, by setting the "SwitchSRS-Association" codepoint field to "ON". Upon detection of the DCI for PUSCH scheduling comprising the "SwitchSRS-Association" codepoint field = "ON", the terminal device 110 may interchange the CoresetPoolIndex values between two configured SRS resource sets. Based on this, the terminal device 110 may overwrite the existing CoresetPoolIndex values with the indicated interchanged values. When the CORESET associated with the interchanged CoresetPoolndex value of triggering uplink DCI (e.g. for PUSCH scheduling or SRS transmission) is associated with the appropriate one of the two configured SRS resource sets, the terminal device 110 may select the appropriate UL SRS resource set and apply the corresponding SRI(s) for UL SRS resource(s) transmission(s) and/or scheduled PUSCH transmission.

As an example, there may be two SRS resource sets (referred to as a first SRS resource set, and a second SRS resource set respectively) to be used and the first and second SRS resource sets are configured to be associated with a first CoresetPoolIndex value (such as CoresetPoolIndex value 0) and a second CoresetPoolIndex value (such as CoresetPoolIndex value 1) respectively. In other words, in this case, the terminal device 110 may be configured with the first SRS resource set associated with the fixed first CoresetPoolIndex value and the second SRS resource set associated with the fixed second CoresetPoolIndex value. Then, upon detection of the DCI including the "SwitchSRS-Association" codepoint field = "ON", the terminal device 110 may determine new CoresetPoolIndex values for the first SRS resource set and the second SRS resource set by inter-changing CoresetPoolIndex values between these two SRS resource sets. As a result of this, the first SRS resource set may be associated with the second CoresetPoolIndex value and the second SRS resource set may be associated with the first CoresetPoolIndex value. Alternatively or additionally, when the "SwitchSRS-Association" codepoint field is set to "OFF" or no value is indicated/configured, the terminal device 110 may ignore the CoresetSetPoolIndex value switching and maintain configured CoresetPoolIndex values.

As another example, there may be more than two SRS resource sets to be used, in this case, the information may indicate the terminal device 110 to change the CoresetPoolIndex value associations among these multiple SRS resource sets. For instance, there may be four SRS resource sets (referred to as a first SRS resource set, a second SRS resource set, a third SRS resource set, and a fourth SRS resource set), and these four SRS resource sets may be configured to be associated with four CoresetPoolIndex values (referred to as a first CoresetPoolIndex value, a second CoresetPoolIndex value, a third CoresetPoolIndex value, and a fourth CoresetPoolIndex value) respectively. Then, upon detection of the DCI including "SwitchSRS-Association" codepoint field = "ON", the terminal device 110 may determine new CoresetPoolIndex values for these four SRS resource sets by circulating the order of the four CoresetPoolIndex values. For example, assuming that the fixed association pairs are: the first SRS resource set and the first CoresetPoolIndex value, the second SRS resource set and the second CoresetPoolIndex value, the third SRS resource set and the third CoresetPoolIndex value, and the fourth SRS resource set and the fourth CoresetPoolIndex value, then, the new association pairs updated after the circulation may be: the first SRS resource set and the second CoresetPoolIndex value, the second SRS resource set and the third CoresetPoolIndex value, the third SRS resource set and the fourth CoresetPoolIndex value, and the fourth SRS resource set and the first CoresetPoolIndex value.

As another different example embodiment, there may be two SRS resource sets (referred to as a first SRS resource set, and a second SRS resource set respectively) to be used and the first and second SRS resource sets are configured to be associated with a first CoresetPoolIndex value (such as CoresetPoolIndex value 0) and a second CoresetPoolIndex value (such as CoresetPoolIndex value 1) respectively. In other words, in this case, the terminal device 110 may be configured with the first SRS resource set associated with the fixed first CoresetPoolIndex value and the second SRS resource set associated with the fixed second CoresetPoolIndex value. Then, upon detection of the DCI including the "SwitchSRS-Association" codepoint field = "ON", the terminal device 110 may determine new CoresetPoolIndex values for the first SRS resource set by using the CoresetPoolIndex of the second SRS resource set and apply the existing CoresetPoolndex value for the second SRS resource set. Alternatively, upon detection of the DCI including the "SwitchSRS-Association" codepoint field = "OFF", the terminal device 110 may determine new CoresetPoolIndex values for the second SRS resource set by using the CoresetPoolIndex of the first SRS resource set and the apply existing CoresetPoolndex value for the first SRS resource set. Alternatively or additionally, when the "SwitchSRS-Association" codepoint field no value is indicated/configured, the terminal device 110 may ignore the CoresetSetPoolIndex value switching and maintain configured CoresetPoolIndex values.

In some example embodiments, the information may be transmitted in an existing codepoint field in a DCI. For example, the existing codepoint field may comprise a field of an SRS resource indicator with 2 bits. In this case, the existing SRS resource indicator may be repurposed to indicate the interchange of CoresetPoolIndex values between at least two SRS resource sets of the one or more SRS resource sets.

For example, the SRS resource indicator may be reused as follows:
- codepoint value = '00': switch a CoresetPooIndex value of the first SRS resource set to the second CoresetPoolIndex value (for example, value 1) and a CoresetPoolndex value of the second SRS resource set to the first CoresetPoolIndex value (for example, value 0).
- codepoint value = '01': switch a CoresetPooIndex value of the first SRS resource set to the first CoresetPoolIndex value and a CoresetPoolndex value of the second SRS resource set to the second CoresetPoolIndex value.
- codepoint value = '10': reserved
- codepoint value = '11': reserved

Alternatively or additionally, the SRS resource indicator may be reused as follows:
- codepoint value = '00': switch a CoresetPooIndex value of the first SRS resource set to the second CoresetPoolIndex value (for example, value 1) and a CoresetPoolndex value of the second SRS resource set to the first CoresetPoolIndex value (for example, value 0).
- codepoint value = '01': switch a CoresetPooIndex value of the first SRS resource set to the first CoresetPoolIndex value and a CoresetPoolndex value of the second SRS resource set to the second CoresetPoolIndex value.
- codepoint value = '10': switch a CoresetPooIndex value of the first SRS resource set to the CoresetPoolIndex value of the second SRS resource set and use the existing CoresetPoolndex value for the second SRS resource set.
- codepoint value = ` 11': switch a CoresetPoolndex value of the second SRS resource set to the CoresetPoolIndex value of the first SRS resource set and use the existing CoresetPoolndex value for the first SRS resource set.

In some example embodiments, the information may be transmitted in a radio resource control (RRC) message. Alternatively, the information may be transmitted in a medium access control control element (MAC CE). For example, the terminal device 110 may be indicated to switch CoresetPoolIndex values between two configured SRS resource sets via an RRC message or MAC CE signaling.

Then, after determining the coreset pool index associated with the SRS resource set, the terminal device 110 may transmit (220), to the network device 110 or another network device, an SRS transmission. Accordingly, the network device 120 may receive (225) the SRS transmission from the network device 110. For example, the network device 120 may transmit, to the terminal device 110 an SRI associated with the coreset pool index for PUSCH transmission to the network device 120. As an example, the terminal device 110 may transmit (230), to the network device 120, the PUSCH transmission based on the SRI. Accordingly, the network device 120 may receive (235) the PUSCH transmission. Alternatively or additionally, the terminal device 110 may transmit PUSCH transmission to the another network device based on the SRI associated with the coreset pool index for the PUSCH transmission to the another network device. For example, the PUSCH transmission may be comprised in simultaneous multi-panel transmissions (STxMP) from the terminal device 110.

In this way, by providing information related to the change of one or more coreset pool indices associated with one or more SRS resource sets, the SRS resource sets may be configured to contribute to the following PUSCH transmissions, especially when the terminal device rotates. For example, a dynamic indication of CoresetPool Index value switching may be used.

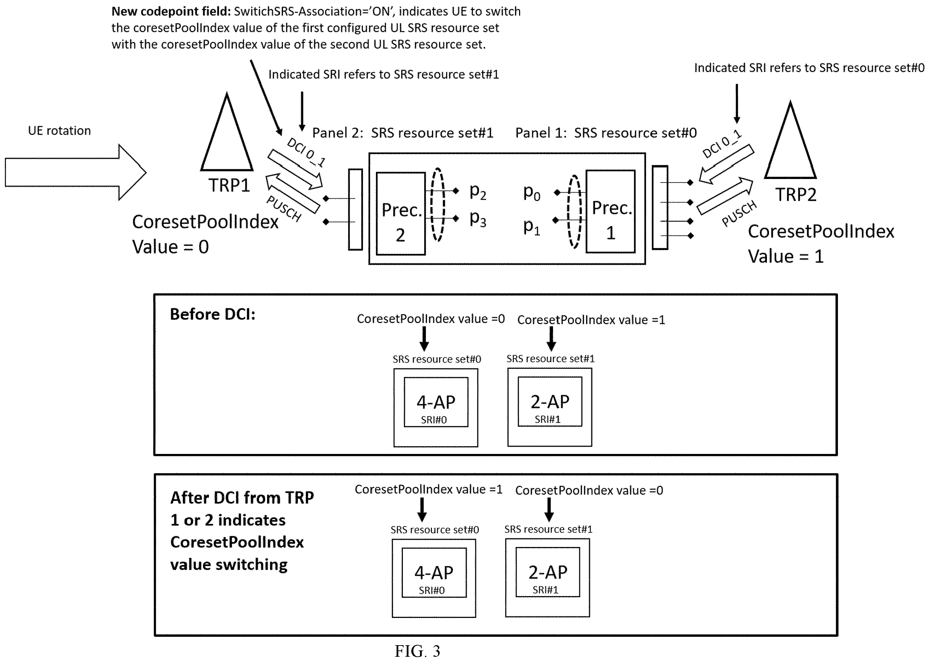

FIG. 3 illustrates an example illustration of a CoresetPoolIndex value switching indication according to some embodiments of the present disclosure. In particular, FIG. 3 may apply to M-DCI based STxMP PUSCH CoresetPoolIndex value switching scenarios. For the purpose of discussion, FIG.3 will be described with reference to FIG. 1A.

As shown in FIG. 3, the terminal device 110 is configured with UL SRS resource set #0 with fixed CoresetPoolIndex value = 0 and UL SRS resource set #1 with fixed CoresetPoolIndex value = 1. The terminal device 110 has rotated, for example, by 180 degrees. The terminal device 110 communicates with the TRP1 and TRP2. The TRP1 and TRP2 may be associated with the network device 120, or alternatively, the TRP1 and TRP2 may be associated with the network device 120 and another network device respectively. Based on UE capability index reporting and configured UL SRS resource sets #0 and #1, both the TRP1 and TRP2 are aware of the terminal device's UL SRS transmission capability (for example, the number of SRS antenna ports) to a set of specific DL RS resources. Based on the information, both the TRP1 and TRP2 can identify that configured UL SRS resource sets, i.e. SRS resource sets #0 and #1, have wrong coresetPoolIndex values associated with both SRS resource sets #0 and #1 (i.e. SRS resource set #0 with CoresetPoolIndex value= 0 and SRS resource set #1 with CoresetPoolIndex value = 0). To enable PUSCH scheduling with UL SRS resources with THE correct CoresetPoolIndex value, The TRP1 triggers an uplink PUSCH scheduling DCI comprising a new codepoint field "SwitchSRS-Association" = "On".

Upon the detection of DCI including the "SwitchSRS-Association" codepoint field = `ON', the terminal device 110 determines new CoresetPoolIndex values for UL SRS resource sets #0 and #1 by inter-changing CoresetPoolIndex values between these two SRS resource sets. In other words, the terminal device 110 overwrites existing CoresetPoolIndex values with indicated inter-changed values of these two SRS resource sets. Then, the terminal device 110 selects the corresponding UL SRS resource set and applies the SRS resource indication for scheduled PUSCH transmission. As a result, the UL SRS resource set #0 is associated with CoresetPoolIndex value =1 and the UL SRS resource set #1 is associated with CoresetPoolIndex value = 0, leading to the use of the correct UL SRS resource with the correct CoresetPoolIndex for scheduled PUSCH transmission.

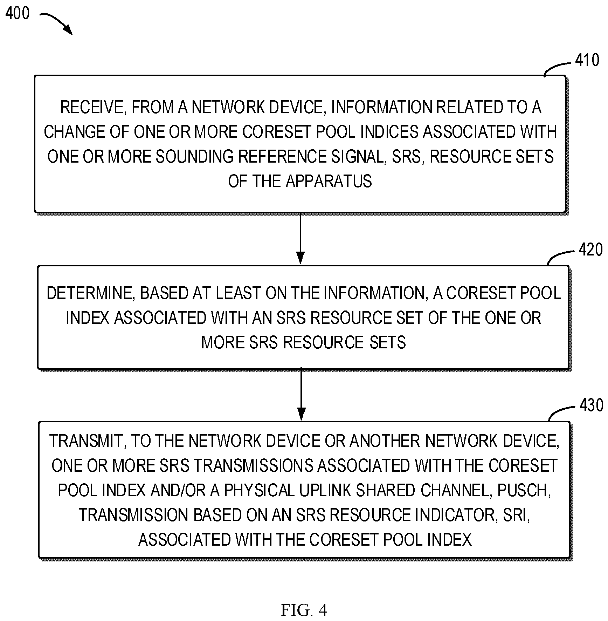

FIG. 4 illustrates a flowchart 400 of a method implemented at a terminal device according to some embodiments of the present disclosure. For the purpose of discussion, the method 400 will be described from the perspective of the terminal device 110 with reference to FIG. 1.

At block 410, the terminal device 110 receives, from the network device 120, information related to a change of one or more coreset pool indices associated with one or more sounding reference signal, SRS, resource sets of the terminal device 110. At block 420, the terminal device 110 determines, based at least on the information, a coreset pool index associated with an SRS resource set of the one or more SRS resource sets. At block 430, the terminal device 110 transmits, to the network device 120 or another network device 120, one or more SRS transmissions associated with the coreset pool index and/or a physical uplink shared channel, PUSCH, transmission based on an SRS resource indicator, SRI, associated with the coreset pool index.

In some example embodiments, the information may indicate whether a coreset pool index switch between at least two SRS resource sets of the one or more SRS resource sets is to be applied at the terminal device 110. In some example embodiments, the terminal device 110 may further determine, based on the information, coreset pool indices associated with the at least two SRS resource sets, by a coreset pool index interchanging between the at least two SRS resource sets.

In some example embodiments, the information may indicate one or more coreset pool indices associated with the one or more SRS resource sets, to be used at the terminal device 110.

In some example embodiments, the information may be comprised in a new codepoint field or an existing codepoint field in downlink control information, DCI, and wherein the existing codepoint field comprises a field of an SRS resource indicator.

In some example embodiments, the PUSCH transmission may be comprised in simultaneous multi-panel transmissions, STxMP, from the terminal device 110.

In some example embodiments, the terminal device 110 may further receive, from the network device 120, the information via a radio resource control, RRC, message, a medium access control control element, MAC CE, a DCI, or any combination of the above-listed items.

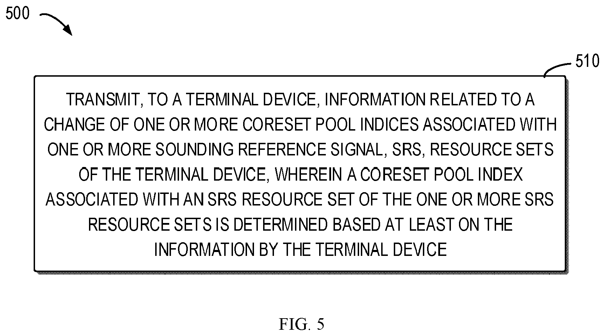

FIG. 5 illustrates a flowchart 500 of a method implemented at a network device according to some embodiments of the present disclosure. For the purpose of discussion, the method 500 will be described from the perspective of the network device 120 with reference to FIG. 1.

At block 510, the network device 120 transmits, to a terminal device 110, information related to a change of one or more coreset pool indices associated with one or more sounding reference signal, SRS, resource sets of the terminal device 110, wherein a coreset pool index associated with an SRS resource set of the one or more SRS resource sets is determined based at least on the information by the terminal device 110.

In some example embodiments, the information may indicate whether a coreset pool index switch between at least two SRS resource sets of the one or more SRS resource sets is to be applied at the terminal device 110.

In some example embodiments, the information may indicate one or more coreset pool indices associated with the one or more SRS resource sets, to be used at the terminal device 110.

In some example embodiments, the information may be comprised in a new codepoint field or an existing codepoint field in downlink control information, DCI, and wherein the existing codepoint field comprises a field of an SRS resource indicator.

In some example embodiments, the PUSCH transmission may be comprised in simultaneous multi-panel transmissions, STxMP, from the terminal device 110.

In some example embodiments, the network device 120 may further transmit, to the terminal device 110, the information via at a radio resource control, RRC, message, a medium access control control element, MAC CE, a DCI, or any combination of the above-listed items.

In some example embodiments, an apparatus capable of performing the method 400 (for example, the terminal device 110) may comprise means for performing the respective steps of the method 400. The means may be implemented in any suitable form. For example, the means may be implemented in a circuitry or software module.

In some example embodiments, the apparatus comprises means for receiving, from a network device, information related to a change of one or more coreset pool indices associated with one or more sounding reference signal, SRS, resource sets of the apparatus; means for determining, based at least on the information, a coreset pool index associated with an SRS resource set of the one or more SRS resource sets; and means for transmitting, to the network device or another network device, one or more SRS transmissions associated with the coreset pool index and/or a physical uplink shared channel, PUSCH, transmission based on an SRS resource indicator, SRI, associated with the coreset pool index.

In some example embodiments, the information indicates whether a coreset pool index switch between at least two SRS resource sets of the one or more SRS resource sets is to be applied at the apparatus. In some example embodiments, the apparatus further comprises means for determining, based on the information, coreset pool indices associated with the at least two SRS resource sets, by a coreset pool index interchanging between the at least two SRS resource sets.

In some example embodiments, the information indicates one or more coreset pool indices associated with the one or more SRS resource sets, to be used at the apparatus.

In some example embodiments, the information is comprised in a new codepoint field or an existing codepoint field in downlink control information, DCI, and wherein the existing codepoint field comprises a field of an SRS resource indicator.

In some example embodiments, the PUSCH transmission is comprised in simultaneous multi-panel transmissions, STxMP, from the apparatus.

In some example embodiments, the apparatus further comprises means for receiving, from the network device, the information via at least one of a radio resource control, RRC, message, a medium access control control element, MAC CE, or a DCI.

In some example embodiments, an apparatus capable of performing the method 500 (for example, the network device 120) may comprise means for performing the respective steps of the method 500. The means may be implemented in any suitable form. For example, the means may be implemented in a circuitry or software module.

In some example embodiments, the apparatus comprises means for transmitting, to a terminal device, information related to a change of one or more coreset pool indices associated with one or more sounding reference signal, SRS, resource sets of the terminal device, wherein a coreset pool index associated with an SRS resource set of the one or more SRS resource sets is determined based at least on the information by the terminal device.

In some example embodiments, the information indicates whether a coreset pool index switch between at least two SRS resource sets of the one or more SRS resource sets is to be applied at the terminal device.

In some example embodiments, the information indicates one or more coreset pool indices associated with the one or more SRS resource sets, to be used at the terminal device.

In some example embodiments, the information is comprised in a new codepoint field or an existing codepoint field in downlink control information, DCI, and wherein the existing codepoint field comprises a field of an SRS resource indicator.

In some example embodiments, the PUSCH transmission is comprised in simultaneous multi-panel transmissions, STxMP, from the terminal device.

In some example embodiments, the apparatus further comprises means for transmitting, to the terminal device, the information via at least one of a radio resource control, RRC, message, a medium access control control element, MAC CE, or a DCI.

In some example embodiments, an apparatus capable of performing the method 400 (for example, the terminal device 110) may comprise at least one processor and at least one memory storing instructions that, when executed by the at least one processor, cause the apparatus at least to: receive, from a network device, information related to a change of one or more coreset pool indices associated with one or more sounding reference signal, SRS, resource sets of the apparatus; determine, based at least on the information, a coreset pool index associated with an SRS resource set of the one or more SRS resource sets; and transmit, to the network device or another network device, one or more SRS transmissions associated with the coreset pool index and/or a physical uplink shared channel, PUSCH, transmission based on an SRS resource indicator, SRI, associated with the coreset pool index.

In some example embodiments, the information indicates whether a coreset pool index switch between at least two SRS resource sets of the one or more SRS resource sets is to be applied at the apparatus. In some example embodiments, the apparatus is further caused to: determine, based on the information, coreset pool indices associated with the at least two SRS resource sets, by a coreset pool index interchanging between the at least two SRS resource sets.

In some example embodiments, the information indicates one or more coreset pool indices associated with the one or more SRS resource sets, to be used at the apparatus.

In some example embodiments, the information is comprised in a new codepoint field or an existing codepoint field in downlink control information, DCI, and wherein the existing codepoint field comprises a field of an SRS resource indicator.

In some example embodiments, the PUSCH transmission is comprised in simultaneous multi-panel transmissions, STxMP, from the apparatus.

In some example embodiments, the apparatus is further caused to: receive, from the network device, the information via at least one of a radio resource control, RRC, message, a medium access control control element, MAC CE, or a DCI.

In some example embodiments, an apparatus capable of performing the method 500 (for example, the network device 120) may comprise at least one processor and at least one memory storing instructions that, when executed by the at least one processor, cause the apparatus at least to: transmit, to a terminal device, information related to a change of one or more coreset pool indices associated with one or more sounding reference signal, SRS, resource sets of the terminal device, wherein a coreset pool index associated with an SRS resource set of the one or more SRS resource sets is determined based at least on the information by the terminal device.

In some example embodiments, the information indicates whether a coreset pool index switch between at least two SRS resource sets of the one or more SRS resource sets is to be applied at the terminal device.

In some example embodiments, the information indicates one or more coreset pool indices associated with the one or more SRS resource sets, to be used at the terminal device.

In some example embodiments, the information is comprised in a new codepoint field or an existing codepoint field in downlink control information, DCI, and wherein the existing codepoint field comprises a field of an SRS resource indicator.

In some example embodiments, the PUSCH transmission is comprised in simultaneous multi-panel transmissions, STxMP, from the terminal device.

In some example embodiments, the apparatus is further caused to: transmit, to the terminal device, the information via at least one of a radio resource control, RRC, message, a medium access control control element, MAC CE, or a DCI.

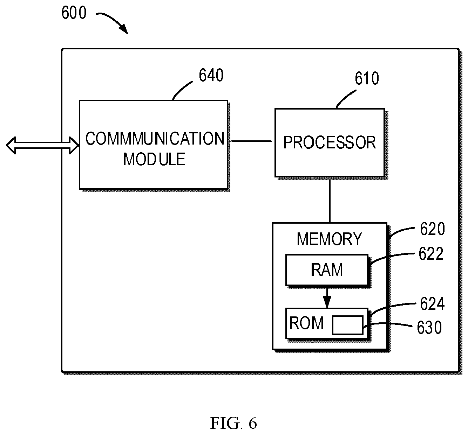

FIG. 6 illustrates a simplified block diagram of a device 600 that is suitable for implementing some example embodiments of the present disclosure. The device 600 may be provided to implement the communication device, for example, the terminal device 110, or the network device 120 as shown in FIG. 1. As shown, the device 600 includes one or more processors 610, one or more memories 620 coupled to the processor 610, and one or more communication modules 640 coupled to the processor 610.

The communication module 640 is for bidirectional communications. The communication module 640 has at least one antenna to facilitate communication. The communication interface may represent any interface that is necessary for communication with other network elements.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a Read Only Memory (ROM) 624, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 622 and other volatile memories that will not last in the power-down duration.

A computer program 630 includes computer executable instructions that are executed by the associated processor 610. The program 630 may be stored in the ROM 624. The processor 610 may perform any suitable actions and processing by loading the program 630 into the RAM 622.

The embodiments of the present disclosure may be implemented by means of the program 630 so that the device 600 may perform any process of the disclosure as discussed with reference to FIG. 2 and FIG. 3. The embodiments of the present disclosure may also be implemented by hardware or by a combination of software and hardware.

In some example embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. The computer readable medium may include any types of tangible non-volatile storage, such as ROM, EPROM, a flash memory, a hard disk, CD, DVD, and the like.

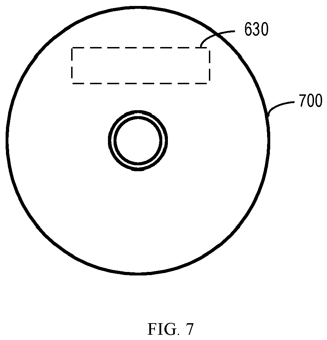

FIG. 7 illustrates a block diagram of an example of a computer readable medium 700 in accordance with some example embodiments of the present disclosure. The computer readable medium 700 has the program 630 stored thereon. It is noted that although the computer readable medium 700 is depicted in form of CD or DVD in FIG. 7, the computer readable medium 700 may be in any other form suitable for carry or hold the program 630.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to FIG. 4 or FIG. 5. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising means for:
receiving (210), from a network device, an instruction to perform an interchanging of an association of coreset pool indices with sounding reference signal, SRS, resource sets of the apparatus;
interchanging (215), based at least on the instruction, an association of a first coreset pool index with a first SRS resource set of the SRS resource sets and an association of a second coreset pool index with a second SRS resource set of the SRS resource sets to an association of the first coreset pool index with the second SRS resource set and an association of the second coreset pool index with the first SRS resource set; and
transmitting, to a network device, one or more SRS transmissions (220) associated with the first or second coreset pool index in accordance with the interchanged association and/or a physical uplink shared channel, PUSCH, transmission (230) based on an SRS resource indicator, SRI, associated with the first or second coreset pool index in accordance with the interchanged association.

2. The apparatus of claim 1, wherein the instruction indicates whether the association interchanging is to be turned on or off.

3. The apparatus of claim 1 or 2, wherein the instruction is comprised in one bit Boolean indicator.

4. The apparatus of claim 2 or claim 3, wherein the instruction is comprised in a radio resource control message or a medium access control control message.

5. The apparatus of claim 1, wherein the instruction is comprised in an SRI of a Downlink Control Information, DCI.

6. The apparatus of claims 5, wherein a codepoint value indicates to switch a first coreset pool index value of the first SRS resource set to a second coreset pool index value and the second coreset pool index value of the second SRS resource to the first coreset pool index value.

7. The apparatus of any of claims 1-6, wherein the PUSCH transmission is comprised in simultaneous multi-panel transmissions from the apparatus.

8. An apparatus comprising means for:
transmitting (205), to a terminal device, an instruction to perform interchanging of an association of coreset pool indices with sounding reference signal, SRS, resource sets of the apparatus; and
receiving, from the terminal device, in accordance with the interchanged association, one or more SRS transmissions (225) and/or a physical uplink shared channel, PUSCH, transmission (235) based on an SRS resource indicator, SRI.

9. The apparatus of claim 8, wherein the instruction indicates whether the association interchanging is on or off.

10. The apparatus of claim 8 or claim 9, wherein the instruction is comprised in one bit Boolean indicator.

11. The apparatus of claim 9 or claim 10, wherein the instruction is comprised in a radio resource control message or a medium access control control message.

12. The apparatus of claim 8, wherein the instruction is comprised in an SRI of a Downlink Control Information, DCI.

13. The apparatus of claim 12, wherein a codepoint value indicates to switch a first coreset pool index value of the first SRS resource set to a second coreset pool index value and the second coreset pool index value of the second SRS resource to the first coreset pool index value.

14. A method comprising:
receiving (210), from a network device, an instruction to perform an interchanging of an association of coreset pool indices with sounding reference signal, SRS, resource sets of the apparatus;
interchanging (215), based at least on the instruction, an association of a first coreset pool index with a first SRS resource set of the SRS resource sets and an association of a second coreset pool index with a second SRS resource set of the SRS resource sets to an association of the first coreset pool index with the second SRS resource set and an association of the second coreset pool index with the first SRS resource set; and
transmitting, to a network device, one or more SRS transmissions (220) associated with the first or second coreset pool index in accordance with the interchanged association and/or a physical uplink shared channel, PUSCH, transmission (230) based on an SRS resource indicator, SRI, associated with the first or second coreset pool index in accordance with the interchanged association.

15. A computer program (630) comprising computer executable instructions, which when executed by at least one processor cause an apparatus to perform a method comprising:
receiving (210), from a network device, an instruction to perform an interchanging of an association of coreset pool indices with sounding reference signal, SRS, resource sets of the apparatus;
interchanging (215), based at least on the instruction, an association of a first coreset pool index with a first SRS resource set of the SRS resource sets and an association of a second coreset pool index with a second SRS resource set of the SRS resource sets to an association of the first coreset pool index with the second SRS resource set and an association of the second coreset pool index with the first SRS resource set; and
transmitting, to a network device, one or more SRS transmissions (220) associated with the first or second coreset pool index in accordance with the interchanged association and/or a physical uplink shared channel, PUSCH, transmission (230) based on an SRS resource indicator, SRI, associated with the first or second coreset pool index in accordance with the interchanged association.
